# EUROPÄISCHE PATENTSCHRIFT

(11) **EP 2 729 275 B1**
(45) Veröffentlichungstag und Bekanntmachung des Hinweises auf die Patenterteilung: **03.10.2018**
(21) Anmeldenummer: 12738074.9
(22) Anmeldetag: 09.07.2012
(51) Int. Cl.: B23K 26/36, B23K 26/08

(54) **VERFAHREN UND VORRICHTUNG ZUR WERKSTÜCKBEARBEITUNG, INSBESONDERE FÜR DIE HERSTELLUNG VON SCHNEIDWERKZEUGEN**
METHOD AND DEVICE FOR MACHINING, IN PARTICULAR FOR THE MANUFACTURE OF CUTTING TOOLS
DISPOSITIF ET MÉTHODE DE TRAVAIL D'UNE PIÈCE, EN PARTICULIER POUR LA FABRICATION D'OUTILS DE COUPE

(30) Priorität: 07.07.2011 DE 102011078825
(43) Veröffentlichungstag der Anmeldung: 14.05.2014
(73) Patentinhaber: Sauer GmbH Lasertec, 87459 Pfronten (DE)
(72) Erfinder: HILDEBRAND, Peter, 87459 Pfronten (DE)
(74) Vertreter: Beetz & Partner mbB
(86) Internationale Anmeldenummer: PCT/EP2012/063424
(87) Internationale Veröffentlichungsnummer: WO 2013/004850

(56) Entgegenhaltungen:
- EP-A2- 2 314 412
- WO-A1-2004/105996

## Beschreibung

Die Erfindung betrifft ein Verfahren und eine Vorrichtung zur Werkstückbearbeitung, die zum Beispiel vorteilhafterweise bei der Fertigung von Schneidwerkzeugen mit Diamant-Schneidkanten eingesetzt werden können.

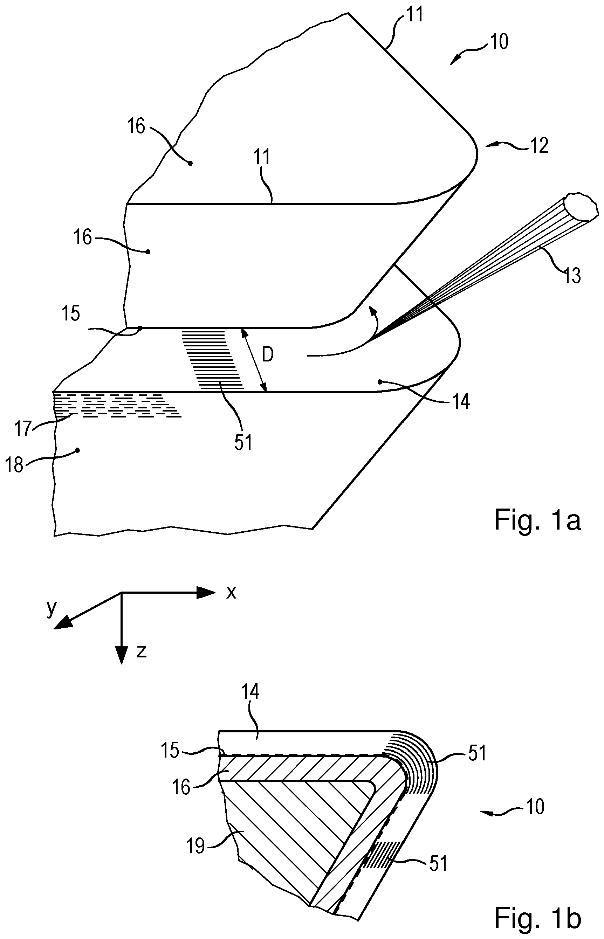

Fig. 1a und Fig. 1b zeigen die Verhältnisse schematisch. 10 symbolisiert ein Werkstück. Fig. 1a zeigt schematisch einen Teil davon während der Herstellung perspektivisch, während Fig. 1b eine Schnittzeichnung ist. In Fig. 1b bezeichnet 19 einen metallischen Grundkörper, der geeignet und wie gewünscht geformt ist. Er ist mit einer künstlich gebildeten Diamantschicht überzogen, die Bereiche 14 und 16 aufweist, zwischen denen eine Trennlinie 15 gezeigt ist. Die Diamantschicht ist auf den gefertigten Rohling 19 aufgebracht worden und kann eine CVD-Diamantschicht ("Chemical Vapor Deposition") oder eine PKD-Diamantschicht (polykristalliner Diamant) sein. Ihre Dicke ist nach Beendigung des Auftrags stärker als zuletzt benötigt, und die zuletzt benötigte Form einschließlich der Schneidkante des Schneidwerkzeugs wird erzeugt, indem mittels einer Laserabtragsmaschine das überschüssige Diamantmaterial abgetragen wird, bis die endgültig gewünschte Form einschließlich der Schneidkantenform vorliegt.

Fig. 1a zeigt schematisch perspektivisch ein teilgefertigtes Schneidwerkzeug. Der obere Bereich ist schon endgültig gefertigt, die Kante 11 ist die Schneidkante des Schneidwerkzeugs, die im gezeigten Bearbeitungsstadium schon herausgearbeitet worden ist. Angenommen wird, dass nach unten weg noch die Freiflächen des Schneidwerkzeugs in der zuletzt gewünschten Form herzustellen sind, indem überschüssiges Diamantmaterial abgetragen wird. In Fig. 1b bedeutet dies, dass das Material 14 vom Äußeren des Rohlings her bis hin zur Grenze 15 abgetragen ist, was schichtweise vorgenommen wird, wobei die Schichten parallel zur Zeichenebene liegen und senkrecht zu ihr gestapelt sind. In Fig. 1a geschieht dies, indem ein Laserstrahl 13 über die zugängliche Oberfläche des überschüssigen Materials geführt wird, um das Material zu verflüssigen und zu verdampfen (auch Dampfaustreibung von Flüssigkeitströpfchen) bzw. zu verbrennen.

Die Führung des Laserstrahls 13 über die zugängliche Werkstückoberfläche geschieht bahnweise in der Art, dass mehrere Bahnen, die nebeneinander liegen, sequentiell abgefahren werden und so zusammen eine abgetragene Schicht abdecken. In den Fig. 1a und 1b sind diese Bahnen mit Bezugsziffer 51 angedeutet, während die zukünftig noch abzutragenden Schichten durch die gestrichelten Linien 17 angedeutet sind. Mittels mehrerer nebeneinander liegender und aneinander angrenzender Bahnen wird eine Schicht des Materials abgetragen, und indem mehrere Schichten abgetragen werden (in Fig. 1a in z-Richtung senkrecht zur Zeichenebene gestapelt), wird die zuletzt gewünschte Form des Werkstücks aus dem Rohling herausgearbeitet.

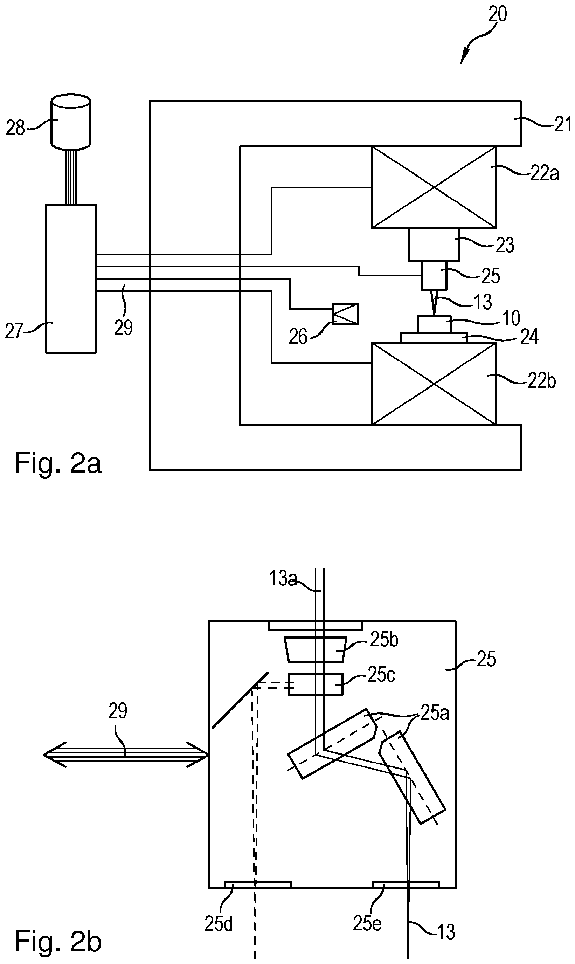

Fig. 2a zeigt schematisch eine Laserbearbeitungsmaschine. 10 symbolisiert wieder das Werkstück, während 25 ein Laserwerkzeug symbolisiert, dem ein fokussierter, konvergierender Laserstrahl 13 entspringt, der auf das Werkstück gerichtet ist. 24 ist ein Werkstücktisch, 23 eine Werkzeugaufnahme. 22a und 22b sind translatorische und/oder rotatorische Stellachsen, mittels derer Relativpositionen (x, y, z) zwischen Werkzeug und Werkstück dreidimensional eingestellt werden können und mittels derer auch Ausrichtungen (phi, psi) von Werkstück und Werkzeug relativ zueinander frei eingestellt werden können. Je nach Maschinentyp und Eignung können die Stellachsen zwischen Maschinenrahmen 21 und Werkstücktisch 24 und/oder zwischen Maschinenrahmen 21 und Werkzeughalterung 23 vorgesehen sein. Achsen können redundant vorgesehen sein. Vorzugsweise sind mindestens drei translatorische Stellachsen und zwei rotatorische Stellachsen vorgesehen.

26 symbolisiert allgemein eine Sensorik zur Erfassung von Prozessparametern. Sie kann zur Erfassung der Werkstückoberfläche auch unmittelbar während der Werkstückbearbeitung ausgelegt sein und kann ggf. auch das Werkstück dreidimensional auflösend in einer Auflösung entsprechend der der Fertigungsgenauigkeit vermessen. 27 symbolisiert eine Maschinensteuerung. Es kann sich um einen digitalen Prozessrechner handeln, der auch an ein größeres oder kleineres Netzwerk angeschlossen sein kann. Die Steuerung ist mit einem Speicher 28 verbunden, der neben verschiedenen anderen Daten auch solche Daten enthält, die zur Generierung der Ansteuersignale für einerseits das Laserwerkzeug 25 und andererseits die Stellachsen 22 benötigt werden. 29 symbolisiert die Schnittstelle zwischen Steuerung 27 und Maschine 20. Sie umfasst einerseits Leitungen für Signale und/oder (geschaltete, getastete) Leistung, und umfasst darüber hinaus nicht gezeigte Wandlungseinrichtungen für Formatwandlung, Analog-/Digital-Wandlung oder Digital-/Analog-Wandlung, und ähnliches.

Das Laserwerkzeug 25 ist in Fig. 2b gezeigt. Es ist dazu ausgelegt, den Laserstrahl unter Steuerung der Maschinensteuerung 27 in gewünschter Weise über die Oberfläche des Werkstücks zu führen, insbesondere um die in Fig. 1a angedeuteten Bahnen 51 abzufahren. Dies kann beispielsweise über ansteuerbare und anstellbare Spiegel 25a zweidimensional geschehen. Darüber hinaus kann eine Fokuseinstellung 25b vorgesehen sein ("z-shifter"), die die Fokuslage des Laserstrahls 13 einerseits dem Arbeitsfortschritt (in z-Richtung in Fig. 1a) und andererseits der Kalotte bei der Laserauslenkung nachführt.

Allerdings wurden bisher bei der Fertigung von hochpräzise zu fertigenden Werkstücken, wie etwa Schneidwerkzeuge mit Diamantüberzug, die optischen Elemente 25a zur Strahlführung (verstellbare Spiegel) nicht verwendet. Stattdessen wurden die mechanischen Stellachsen 22a und 22b der Maschine 20 verwendet, während der Laserstrahl 13 stationär relativ zum Laserwerkzeug 25 diesem entsprang.

Die Strahlführung des Lasers mittels einstellbarer Spiegel 25a hat den Vorteil, dass sie vergleichsweise schnell ist. Mit ihr sind Bahnführungsgeschwindigkeiten (Bewegungsgeschwindigkeit des Lasersauftreffpunkts bzw. - flecks auf der Werkstückoberfläche) von über 1 m/s bis hin zu 10 m/s und mehr einstellbar. Nachteil dieser optischen Strahlführung ist es allerdings, dass sie dynamisch relativ ungenau ist, insbesondere oft ungenauer als die geforderten Toleranzen. Demgegenüber viel genauer, aber auch deutlich langsamer, ist die Strahlführung, wenn man die relative Führung zwischen Laserwerkzeug 25 und Werkstück 10 nicht über die verstellbaren Spiegel 25a vornimmt, sondern über die mechanischen Stellachsen 22a und 22b (translatorisch und/oder rotatorisch, vorgesehen zwischen Maschinenrahmen 21 und Werkzeughalterung 23 und/oder zwischen Maschinenrahmen 21 und Werkstücktisch 24) vornimmt. Es sind dann Genauigkeiten bis hin zu wenigen Mikrometern möglich. Allerdings sind die erreichbaren Geschwindigkeiten bei mechanischer Führung deutlich geringer. Üblicherweise liegen sie unter 10 mm/s (Bahnführungsgeschwindigkeit des Laserauftreffpunkts auf der Werkstückoberfläche). Sie liegen damit üblicherweise mindestens um einen Faktor 100 unter denjenigen, die bei optischer Strahlführung erreichbar sind, und dementsprechend deutlich länger dauert die Werkstückfertigung.

Bei bestimmten Werkstücken, etwa Schneidwerkzeugen, ist eine hohe Genauigkeit der gefertigten Geometrie wünschenswert, so dass bei Laserfertigung des Werkstücks zur Erreichung der gewünschten Genauigkeiten die Verwendung der mechanischen Stellachsen 22a statt der optischen Elemente 25a zur Laserstrahlführung notwendig ist. Der vergleichsweise langsame und deshalb lange dauernde Vorgang stört weniger, wenn das insgesamt abzutragende Material vergleichsweise wenig ist. Bei diamantbesetzten Schneidwerkzeugen ist dies beispielsweise dann der Fall, wenn der Diamantüberzug aus CVD-Diamanten besteht, denn die so gefertigten Überzüge des Rohlings sind vergleichsweise dünn und haben nur geringe überstehende Materialmengen, so dass dementsprechend auch nur vergleichsweise geringe Volumina abzutragen sind.

Es hat sich aber gezeigt, dass auch die Fertigung von Werkstücken, bei denen vergleichsweise viel Material abzutragen ist, mit hoher Genauigkeit über die mechanischen Stellachsen wünschenswert ist. Bei Schneidwerkzeugen mit Diamantüberzug sind dies beispielsweise PKD-Diamantüberzüge, deren Schichtdicken wesentlich mächtiger sind als die von CVD-Diamantüberzügen, so dass dementsprechend auch mehr Material abzutragen ist. Hierbei führt dann die Fertigung über die mechanischen Stellachsen zur Führung des Laserstrahls zu Fertigungszeiten, die nur in Ausnahmefällen hinnehmbar sind.

Die EP 2314412 A2 beschreibt eine Laserbearbeitungsvorrichtung zur Herstellung einer Kontur an einem Rohling, mit einem Laser, der Laserstrahlimpulse erzeugt, einer Ablenkeinrichtung, die die Laserstrahlimpulse des Lasers auf voneinander beabstandete vorgegebene Auftreffstellen innerhalb einer vorgegebenen Pulsfläche auf dem Rohling richtet, und einer Positioniereinrichtung, die eine Relativbewegung zwischen dem Rohling und der Pulsfläche ausführt, wobei die Relativbewegung in einer Relativbewegungsrichtung entlang der zu erzeugenden Kante und/oder Fläche verläuft.

Die WO 2004/105996 beschreibt ein Laserabtragsverfahren, bei dem Laserkopf und Werkstück mittels mechanischer Stellachsen auf eine Relativlage eingestellt werden, aus der heraus dann mittels optischer Einrichtungen ein Laserstrahlfokus dreidimensional im Raum geführt wird.

Aufgabe der Erfindung ist es, ein Laserbearbeitungsverfahren und eine Laserbearbeitungsmaschine anzugeben, die das sehr genaue Fertigen von Werkstücken erlauben.

Diese Aufgabe wird mit den Merkmalen der unabhängigen Patentansprüche 1 und 14 gelöst. Die abhängigen Patentansprüche sind auf bevorzugtes Ausführungsformen der Erfindung gerichtet.

Allgemein ausgedrückt wird ein Verfahren zur Werkstückbearbeitung mit einem Laserstrahl angegeben, das unterschiedliche Abtragsphasen hat, wobei in den beiden Abtragsphasen optische Strahlführung und mechanische Strahlführung unterschiedlich gewichtet eingesetzt werden, nämlich in der Weise, dass in der ersten Abtragsphase die optische Strahlführung eingesetzt wird und in der zweiten Abtragsphase ausschließlich die mechanische Strahlführung eingesetzt wird.

Ein Verfahren zur Werkstückbearbeitung eines Werkstücks in einer Maschine mit einem Laserstrahl aus einem Laserwerkzeug, bei dem zur Werkstückfertigung mit einem Laserstrahl schichtweise Material des Werkstücks nach Maßgabe vorgegebener Definitionen abgetragen wird, indem die freiliegende Werkstückoberfläche bahnweise und flächendeckend mit einem Laserstrahl abgefahren wird, um Werkstückmaterial zu verdampfen und/oder zu verbrennen, hat eine erste Abtragsphase, während derer der Laserstrahl mittels variabler optischer Einrichtungen, insbesondere einstellbare Spiegel innerhalb des Laserwerkzeugs, relativ zum Werkstück über die Werkstückoberfläche geführt wird, ohne gleichzeitigen Einsatzes mechanischer Stellachsen zur Einstellung der Relativlage zwischen Laserwerkzeug und Werkstück bewegt werden, und eine zweite Abtragsphase, während derer der Laserstrahl mittels einer oder mehrerer Stellachsen der Maschine relativ zum Werkstück über die Werkstückoberfläche geführt wird, wobei die Brennweite durch eine variable optische Einrichtung variabel einstellbar sein kann.

Die erste Abtragsphase kann beim Abtrag von Bereichen verwendet werden, die etwas entfernt von bzw. nicht unmittelbar angrenzend an die endgültigen Oberfläche des Werkstücks liegen, während die zweite Abtragsphase beim Abtrag von Bereichen verwendet werden kann, die unmittelbar an und nahe der endgültigen Oberfläche des Werkstücks liegen.

Mit Verwendung der zwei Abtragsphasen kann in der ersten Phase voluminös überschüssiges Material vergleichsweise schnell abgetragen werden, soweit es entfernt von der zuletzt gewünschten Oberfläche des Werkstücks liegt, indem doche Strahlführung (einstellbare Spiegel im Laserwerkzeug) verwendet wird um dynamisch den Hauptanteil der Relativbewegung zwischen Laserauftreffpunkt und Werkstück herzustellen, während an und nahe der endgültig gewünschten Oberfläche in der zweiten Abtragsphase die mechanische Strahlführung (mittels Stellachsen der Maschine) bei festgehaltener oder umgangener optischer Strahlführung verwendet wird, um oberflächennah zwar langsam, aber dafür genau das Werkstück fertigen zu können.

Eine Laserbearbeitungsmaschine zur Bearbeitung eines Werkstücks hat ein Laserwerkzeug) zur Führung eines Laserstrahl, der dazu ausgelegt ist, zur Werkstückfertigung schichtweise Material des Werkstücks nach Maßgabe vorgegebener Definitionen abzutragen, indem die freiliegende Werkstückoberfläche bahnweise und flächendeckend mit einem Laserstrahl abgefahren wird, um Werkstückmaterial zu verdampfen und/oder zu verbrennen, einen Werkstücktisch zum Halten eines Werkstücks, mehrere Stellachsen zur translatorischen und rotatorischen Einstellung der relativen Lage und Haltung von Werkstück und Laserwerkzeug relativ zueinander, und eine Steuerung zur Steuerung der Laserstrahlführung im Laserwerkzeug und der Stellachsen.

Die Steuerung ist dazu ausgelegt, in einer ersten Abtragsphase den Laserstrahl mittels variabler optischer Einrichtungen, insbesondere einstellbare Spiegel innerhalb des Laserwerkzeugs, relativ zum Werkstück über die Werkstückoberfläche zu führen, mit oder ohne gleichzeitigen Einsatzes mechanischer Stellachsen zur Einstellung der Relativlage zwischen Laserwerkzeug und Werkstück bewegt werden, und in einer zweiten Abtragsphase den Laserstrahl mittels einer oder mehrerer Stellachsen der Maschine relativ zum Werkstück über die Werkstückoberfläche zu führen, vorzugsweise ohne dass der Laserstrahl gleichzeitig mittels variabler optischer Einrichtungen geführt wird, wobei die Brennweite durch eine variable optische Einrichtung variabel einstellbar sein kann.

Anders bzw. allgemeiner ausgedrückt ist eine Laserbearbeitungsmaschine, und insbesondere ihre Steuerung, zur Durchführung der in dieser Beschreibung beschriebenen Bearbeitungsverfahren ausgelegt.

Es ist ein Speicher 28 vorgesehen, in dem maßgebliche Daten abgelegt sind. Es handelt sich dabei insbesondere um diejenigen Parameter, die zur Ansteuerung einerseits des Laserwerkzeugs (insbesondere der variablen optischen Elemente darin) und andererseits der Stellachsen 22a, 22b, benötigt werden. Diese Daten können vorab erzeugt und in der Speichereinrichtung 28 gespeichert worden sein, oder sie können in Echtzeit aus höherrangigen Daten, die auch gespeichert sein können, erzeugt werden. Der Speicher 28 hält darüber hinaus Programmdaten für ausführbare Programme zur Durchführung der benötigten Aktivitäten. Die Maschinensteuerung 27 weist Schnittstellen zum Prozess hin auf, insbesondere für die Signalentgegennahme von Prozess-Sensorik 26 her und für Signalabgabe an den Prozess, insbesondere zu den mechanischen Achsen 22 und zum Laserwerkzeug 25 hin.

Nachfolgend werden bezugnehmend auf die Zeichnung Merkmale und Ausführungsformen der Erfindung beschrieben. Es zeigen:
Fig. 1 Darstellungen eines Werkstücks zur Erläuterung von Bearbeitungssituationen und -randbedingungen,
Fig. 2 schematisch eine Laserbearbeitungsmaschine und ein Laserwerkzeug,
Fig. 3 eine Ausführungsform eines zweiphasiges Abtragsverfahren,
Fig. 4 eine Fragmentierung des anfallenden Abtrags in wenigstens einer der Phasen,
Fig. 5 schematisch das Abfahren von Bahnen mit einem gepulsten Laser,
Fig. 6 überlappende Bearbeitungsfragmente,
Fig. 7 eine weitere Ausführungsform eines zweiphasiges Abtragsverfahren, und
Fig. 8 eine Implementierung des Verfahrens der Fig. 7.

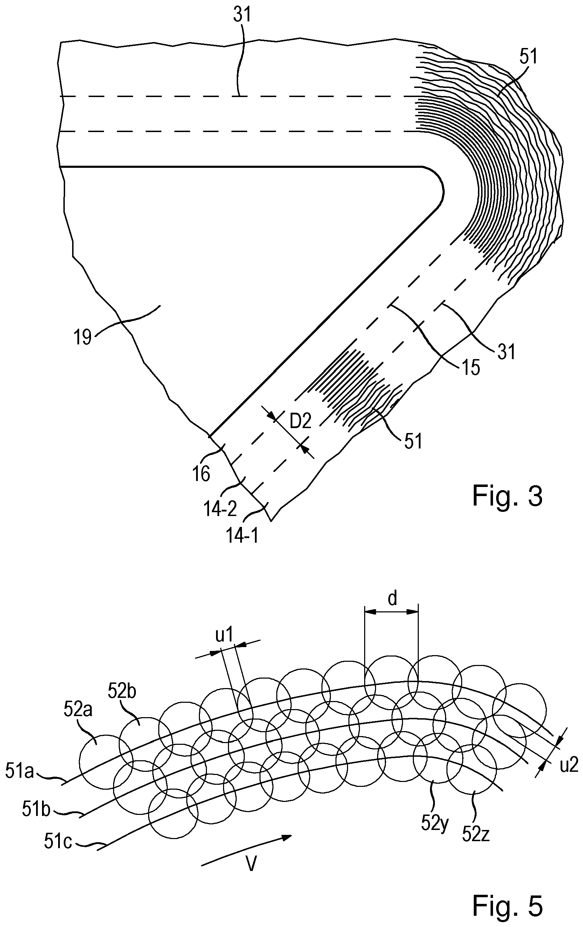

Figur 3 zeigt ein zweiphasiges Abtragsverfahren, bei dem in der ersten Abtragsphase die optische Strahlführung, evtl. überlagert mit der mechanischen Strahlführung, und in der zweiten Abtragsphase nur die mechanische Strahlführung verwendet werden. Für das erfindungsgemäße Verfahren zeigt Fig. 3 schematisch eine Draufsicht auf eine zukünftige Werkstückoberfläche wie folgt:

Qualitativ entspricht die Fig. 3 der Darstellung in der Fig. 1b. 19 kann beispielsweise ein metallischer Rohling sein, der in der gezeigten Ausführungsform nicht bearbeitet wird, weil er unter einer überziehenden DiamantSchicht 14, 16 liegt, die in der gezeigten Ausführungsform beispielsweise PKD-Diamant sein kann. 15 symbolisiert die Bearbeitungsgrenze, von hier aus weg vom metallischen Kern ist Material abzutragen (Bereich 14-1, 14-2), während der Bereich 16 hin zum metallischen Kern 19 stehenbleiben soll. Der abzutragende Bereich 14-1, 14-2 weist zwei getrennte Bereiche mit einer nicht sichtbaren, aber durch die Maschinensteuerung 27 implementierten Grenze 31 zwischen ihnen auf. Im ersten Bereich 14-1 wird in einer ersten Abtragsphase in der Weise gearbeitet, dass der Laserstrahl mittels variabler optischer Einrichtungen 25a über die momentan freiliegende Werkstückoberfläche längs Bahnen 51 geführt wird. In den Figuren 1 und 3 sind diese Bahnen 51 teilweise, aber nicht vollständig durchgezogen, angedeutet.

In der gezeigten Ausführungsform folgen die Bahnen des Laserstrahls auf der Werkstückoberfläche in etwa der zuletzt gewünschten Außenkontur des Werkstücks (symbolisiert durch Linie 15) und sind deshalb häufig mindestens bereichsweise gekrümmt. Wie gezeigt liegen viele Bahnen 51 innerhalb einer Schicht nebeneinander, und indem sie nacheinanderfolgend mit dem Laserstrahl abgefahren werden, wird jeweils ein Materialstreifen entfernt (durch Verdampfen, Dampfaustreibung von aufgeschmolzenem Material, oder Verbrennen/Oxidation), so dass auf diese Weise zunächst eine Schicht und bei wiederholter Ausführung dann schichtweiser Materialabtrag erfolgt.

In Fig. 3 ist angedeutet, dass die Bahnen im Bereich 14-1 entsprechend der ersten Abtragsphase unpräziser liegen können, was der vergleichsweise hohen Arbeitsgeschwindigkeit mittels Laserstrahlführung geschuldet ist. Im zweiten Bereich 14-2 entsprechend der zweiten Abtragsphase wird die Werkstückoberfläche auch mit dem Laserstrahl 13 bahnweise abgefahren. Allerdings wird hier die Relativbewegung nicht mittels Laserstrahlführung über optische Elemente 25a (Schwingspiegel, verstellbare Spiegel oder ähnliches) bewerkstelligt, sondern über die Betätigung der Stellachsen 22a, 22b in geeigneter bzw. notwendiger Weise. Angedeutet ist in Fig. 3 hierzu, dass diese Bahnen genauer eingehalten werden als bei optischer Laserstrahlführung, da die mechanische Strahlführung über die Stellachsen 22 sehr genau arbeitet.

Die Arbeitsweise insgesamt ist deshalb so, dass der außenliegende Bereich 14-1 vergleichsweise schnell, dafür aber nicht ganz so präzise wie letztlich gewünscht, abgetragen wird, indem der Laserstrahl optisch geführt wird, während im innenliegenden Bereich 14-2 der Laserstrahl mechanisch geführt wird, so dass der Abtrag langsamer, aber dafür sehr genau entsprechend der zuletzt gewünschten Genauigkeit erfolgt.

Die Breite D2 des zweiten Bereichs 14-2 kann einigen Bahnen der Laserführung entsprechen, beispielsweise mindestens zwei oder mindestens zehn Bahnen und/oder höchstens zehn oder höchstens 20 Bahnen. Das auswärts davon liegende Material im Bereich 14-1 wird dann maßgeblich durch optische Strahlführung abgetragen.

Fig. 2b zeigt schematisch eine Ausführungsform eines Laserwerkzeugs. Es empfängt von einer (nicht gezeigten) Laserquelle, die im Werkzeug 25 oder außerhalb davon vorgesehen sein kann, Laserlicht 13a. Im Laserwerkzeug 25 kann es zunächst eine Fokussiereinrichtung 25b durchlaufen, die elektronisch einstellbar sein kann und mit der der Fokus des Laserlichts in eine gewünschte z-Position, insbesondere auf die Werkstoffoberfläche, gebracht und dort gehalten werden kann. Die Fokussiereinrichtung 25b kann "schnell" in dem Sinn sein, dass die Fokuslage jederzeit entsprechend der aktuellen Lage des Laserspots auf dem Werkstück eingestellt und auf diese Weise nachgeführt werden kann. Dies kann geregelt geschehen oder gesteuert nach Maßgabe vorher eingestellter Vorgaben.

Weiterhin ist eine Scan-Einrichtung als optische Strahlführung 25a vorgesehen, mit der der Laserstrahl zweidimensional ausgelenkt werden kann. Es kann sich um Schwingspiegel handeln, die um schneidend, insbesondere senkrecht zueinander stehende Achsen schwingen bzw. einstellbar/steuerbar sein können. Auch diese Einstellbarkeit kann schnell in dem Sinne sein, dass damit die gewünschten Bahnen durch Auslenkung in x- und y-Richtung auf der Werkstückoberfläche abgefahren werden können.

Auslassseitig/werkstückseitig kann das Laserwerkzeug 25 eine Öffnung oder ein Strahlauslassfenster 25e aufweisen, das seinerseits nochmals fokussierend wirken kann oder das lediglich eine transparente Platte ist.

In der ersten Abtragsphase werden die veränderlichen/ einstellbaren Spiegel (oder allgemein die variablen optischen Einrichtungen 25a) durch die Maschinensteuerung 27 derart angesteuert, dass sie eine Führung des Laserauftreffpunkts über die Werkstoffoberfläche längs der gewünschten Bahnen bewirken. Um eine Flächenfüllung eines gewünschten Oberflächenbereichs zu erhalten, kann dies eine mäandernde Hin- und Herbewegung sein, oder eine während des Abtrags einseitig gerichtete Bewegung mit dunkel getastetem oder defokusiertem, ggf. deutlich schnellerem Rücklauf.

In der zweiten Abtragsphase kann das Laserlicht ebenso über die einstellbaren Spiegel 25a laufen, die dann allerdings in einer vorbestimmten Position festgehalten werden. Es ist aber auch möglich, das Laserlicht an den Schwingspiegeln 25a vorbeizuführen. Hierzu kann im Lichtweg oberhalb der Schwingspiegel 25a eine Lichtweiche 25c vorgesehen sein, die auch nach Maßgabe der Steuerung 27 arbeitet. In der ersten Arbeitsphase leitet sie Laserlicht 13a zu den Schwingspiegeln 25a, während sie es in der zweiten Arbeitsphase daran vorbeileitet. Das an den Schwingspiegeln 25a vorbeigeleitete Laserlicht kann dann über einen weiteren Auslass 25d oder durch geeignete Einrichtungen über den gleichen Auslass wie vorher schon erwähnt abgestrahlt werden. Das Vorbeileiten des Laserlichts in der zweiten Abtragsphase an den Schwingspiegeln hat den Vorteil, dass die Schwingspiegel durch die Laserlichtleistung weniger belastet sind und dass auch kein Positionsrauschen, das die Schwingspiegel auch im Stillstand erzeugen können, vorliegt.

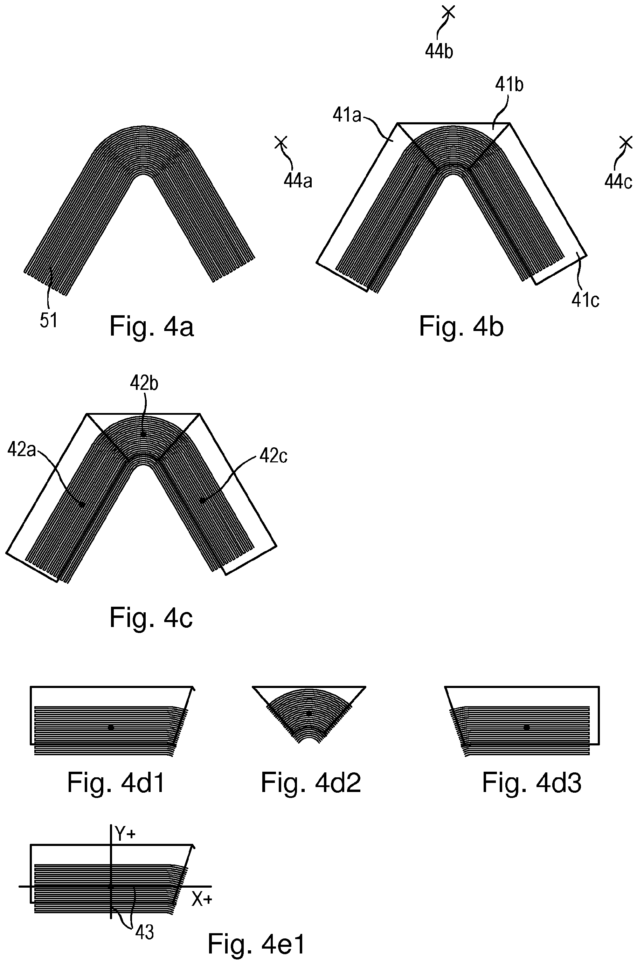

Fig. 4 zeigt eine Ausführungsform, die besonders zur Herstellung vielseitig zu formender Werkstücke geeignet ist. Allgemein bei jeder Bearbeitung eines Werkstücks mit einem Werkzeug muss das Werkstück 10 dem Werkzeug 25 geeignet zugewendet werden. Dies gilt auch bei der Laserbearbeitung. Darüber hinaus ist bei der Laserbearbeitung zu berücksichtigen, dass Abschattungen des Laserlichts durch das Werkstück und ungünstige Auftreffwinkel des Laserlichts auf dem Werkstück nach Möglichkeit zu vermeiden sind. Darüber hinaus muss berücksichtigt werden, dass das Arbeitsfenster eines Laserwerkzeugs begrenzt ist. Es ist durchaus möglich, dass das zu bearbeitende Werkstück größer als das Arbeitsfenster des Laserwerkzeugs ist. Um all diesen Anforderungen gerecht zu werden, kann das in Fig. 4 schematisch angedeutete Vorgehen gewählt werden:

Fig. 4a zeigt schematisch eine Figur, die wiederum qualitativ den Figuren 1b und 3 entspricht. Die dicke unterste Linie in Form eines auf dem Kopf stehenden Vs symbolisiert die Bearbeitungsgrenze, während die "parallel" darüberliegenden Linien die von der Laserführung hervorgerufenen Führungsspuren 51 innerhalb einer Schicht während der ersten und der zweiten Abtragsphase symbolisieren.

Insoweit sei nochmals darauf hingewiesen, dass die Figuren 1b, 3 und 4a-e Draufsichten auf eine einzige abzutragende Schicht zeigen; sie zeigen nicht einen Schnitt durch mehrere abzutragende Schichten. Die parallelen Linien sind nicht symbolische Darstellungen mehrerer Schichten, sondern sind symbolische Darstellungen mehrerer Bahnen innerhalb einer Schicht. Andere Schichten als die jeweils gezeigte hat man sich als über bzw. unter der Zeichenebene parallel dazu liegend vorzustellen.

Fig. 4a betrachtend erkennt man, dass es kaum möglich ist, sie vollständig aus einer einzigen Relativposition zwischen Werkstück 10 und Laserwerkzeug 25 heraus zu fertigen. Würde man das Laserwerkzeug 25 symmetrisch über dem Scheitel des umgedrehten Vs platzieren, wäre der Auftreffpunkt zwar im Bereich des Scheitels der gerundeten Kante zufriedenstellend, aber links und rechts davon ergäben sich schleifende Schnitte, die ungünstig sind. Würde man die Laserquelle nach links rücken, könnte man womöglich einen Kompromiss zur zufriedenstellenden Bearbeitung einerseits des linken Asts der Form und des verrundeten Oberteils finden. Aber die Bearbeitung des rechten Teils wäre umso schlechter oder sogar, wenn abgeschattet, unmöglich.

Um dieses Problems Herr zu werden, wird eine Segmentierung des Werkstücks in der Weise vorgenommen, dass nahtlos aneinander angrenzende oder überlappende Einzelbereiche 41a, 41b und 41c definiert werden, die jeweils separat bearbeitet werden. Dann kann bei der optischen Laserführung (mittels Schwingspiegeln 25a) eine für jeden Bereich individuell gewählte Relativposition und Relativausrichtung zwischen Werkstück und Laserwerkzeug eingenommen werden, die für den jeweiligen Einzelbereich günstig ist. In Fig. 4b sind die Einzelbereichsgrenzen durch Striche angedeutet, und die Kreuze 44a, 44b und 44c deuten jeweilige Relativlagen des Laserwerkzeugs 25 zur Bearbeitung des jeweiligen Einzelbereichs an.

Es kann weiterhin insbesondere so vorgegangen werden, dass nach der Definition der Einzelbereiche 41a, 41b, 41c jedem dieser Einzelbereiche ein individueller Referenzpunkt (dreidimensional definiert) zugeordnet wird. In Fig. 4c sind diese Referenzpunkte der einzelnen Bereiche mit 42a, 42b und 42c gezeigt. Anhand der bekannten Einspannung des Werkstücks in der Maschine kann die Maschinensteuerung die jeweiligen Referenzpunkte in ihrer Lage relativ zur Maschine ermitteln und so auch die Relativpositionierung zwischen Referenzpunkt 42 des jeweils momentan betrachteten Bereichs einerseits und dem Laserwerkzeug 25 andererseits einstellen.

Die Festlegung der Einzelbereiche kann manuell oder automatisch geschehen. Die Festlegung kann auch teilautomatisch in der Weise geschehen, dass manuell beispielsweise Vorgaben dahingehend gemacht werden, wo Bereichsgrenzen sein sollen oder wo sie nicht sein sollen, und dass dann die eigentliche Festlegung der Einzelbereiche automatisch unter Berücksichtigung der Vorgaben geschieht. Beispielsweise ist es wünschenswert, im Bereich einer Schneidkante eines Werkstücks keine Bereichsgrenze vorzusehen, da die Fertigungsgenauigkeiten an Einzelbereichsgrenzen geringer sein können als im Inneren eines Einzelbereichs. Eine andere Vorgabe kann sein, dass am Ende einer ebenen Fläche, also dort, wo sie in eine gekrümmte Fläche übergeht, eine Bereichsgrenze gelegt werden soll. Weitere Festlegungen können dann automatisch getroffen werden, etwa im Hinblick auf die Größe des Arbeitsfensters des Laserwerkzeugs, Vermeidung von Abschattungen des Lasers durch Werkstückteile, Vermeidung großer Abstandsunterschiede oder Ausrichtungsunterschiede zwischen Werkstückoberfläche und Laserwerkzeug innerhalb eines Einzelbereichs.

Auch die Zuweisung von Referenzpunkten 42 kann manuell oder automatisch geschehen. Wenn sie automatisch geschieht, kann der Referenzpunkt beispielsweise als Lage des dreidimensional definierten Schwerpunkts des zu entfernenden Materials gewählt werden. In diesem Zusammenhang wird darauf verwiesen, dass Fig. 4c nahelegt, dass die Referenzpunkte auf der Werkstückoberfläche liegen. Dies ist aber seltenst der Fall. Regelmäßig werden sie im Inneren der abzutragenden Werkstückteile liegen. Jedem Referenzpunkt wird eine translatorisch definierte Referenzposition x0i, y0i, z0i und eine rotatorisch definierte Referenzausrichtung phi0i, psi0i zugewiesen. Bei der Einstellung der Relativlage zwischen Laserwerkzeug und dem jeweiligen Einzelbereich wird dann die Relativposition zwischen Referenzposition und Laserwerkzeug so eingestellt, dass die Referenzausrichtung eine gewünschte Ausrichtung hat.

Während der Bearbeitung eines Einzelbereichs 41a, 41b, 41c in der ersten Abtragsphase wird diese Referenzlage, die mit den mechanischen Stellachsen der Maschine eingestellt wird, beibehalten, und ausgehend von ihr der Laser mittels der variablen optischen Einrichtungen (Schwingspiegel) 25a über die Werkstückoberfläche im jeweils betrachteten Einzelbereich geführt, bis das gewünschte Ergebnis erreicht ist. Es kann dabei so vorgegangen werden, dass zunächst für alle Einzelbereiche die erste Abtragsphase jeweils vollständig ausgeführt wird. Danach kann dann die zweite Abtragsphase kontinuierlich über alle Einzelbereiche hinweg vorgenommen werden. Die Fragmentierung in Einzelbereiche betrifft dann nur das in der ersten Abtragsphase abzutragende Material.

Es kann aber auch die zweite Abtragsphase jeweils einzeln für die Einzelbereiche vollzogen werden, die dann also in die Fragmentierung einbezogen sein können, etwa indem innerhalb eines Einzelbereichs zuerst alle Schichten der ersten Abtragsphase und danach alle Schichten der zweiten Abtragsphase abgetragen werden, und dann zum nächsten Einzelbereich übergegangen wird. In diesem Zusammenhang wird darauf verwiesen, dass die Schichtdicke während der Abtragsphase nicht zwingend die gleiche Schichtdicke wie während der zweiten Abtragsphase sein muss. Abhängig von Laserparametern können die Schichtdicken unterschiedlich sein. Es kann allerdings auch so vorgegangen werden, dass innerhalb einer Schicht unmittelbar nacheinander zunächst die erste Abtragsphase bei festgehaltener mechanischer Relativlage zwischen Werkstück 10 und Laserwerkzeug 25 durchgeführt wird und dann bei festgehaltener optischer Strahlführung die zweite Abtragsphase mittels der mechanischen Stellachsen 22 durchgeführt und danach zum Abtrag der nächsten Schicht übergegangen wird.

Nachdem die Referenzpunkte 42 für die Einzelbereiche 41 definiert sind, wird bei jedem Einzelbereich die nötige Datenmenge aus den vorhandenen Werkstückdefinitionen (etwa CAD-Daten) extrahiert, um separat handhabbare Bearbeitungsprogrammteile zu schaffen. Diese separaten Teile sind durch die Figuren 4d1, 4d2 und 4d3 angedeutet. Für jeden der Bereiche erfolgt dann noch eine Koordinatenumwandlung, um die jeweiligen Bereiche in einem geeigneten, insbesondere an die Relativlage während der Bearbeitung angepassten, Koordinatensystem für die Bearbeitung darzustellen. Das neue Koordinatensystem ist durch Bezugsziffer 43 in Fig. 4e1 angedeutet. Genauso wird für die Einzelbereiche der Figuren 4d2 und 4d3 vorgegangen werden. Man erhält auf diese Weise mehrere separat abarbeitbare Fertigungsprogramme bzw. Steuerungssätze hierfür, die in geeigneten Koordinaten vorliegen und dann bei der Abarbeitung der jeweiligen Teile verwendet werden können.

Durch die Fragmentierung in Einzelbereiche 41a, 41b, 41c wird erreicht, dass insbesondere während der optischen Strahlführung in der ersten Abtragsphase für alle Werkstückoberflächenbereiche gute Bearbeitungsbedingungen vorliegen, so dass sie günstig und effizient bearbeitet werden können.

Wie schon erläutert, kann die Bahnführungsgeschwindigkeit v des Laserstrahls (seines Auftreffpunkts auf der Werkstückoberfläche) zwischen erster und zweiter Abtragsphase deutlich unterschiedlich sein. Während der ersten Abtragsphase sind Geschwindigkeiten über 0,5 m/s bis über 8 m/s die Regel, während während der zweiten Abtragsphase Geschwindigkeiten unter 1 cm/s üblich sind, so dass ein Geschwindigkeitsunterschied um mindestens den Faktor 100 zwischen den beiden Phasen realistisch ist. Um dann den Energieeintrag pro Flächenelement an die geforderte Abtragsleistung anzupassen, kann die Laserimpulsfrequenz eingestellt werden.

Abtragslaserlicht ist üblicherweise gepulstes Laserlicht z. B. aus einem Festkörperlaser, etwa ein YAG-Laser, die kein kontinuierliches Dauerlicht, sondern einzelne Impulse aussenden. Typische Impulsfrequenzen liegen bei optischer Strahlführung (Geschwindigkeit v > 0.5 m/s oder > 1 m/s oder > 3 m/s) bei etwa 10 kHz oder mehr. Um den Energieeintrag pro Fläche auch bei der langsamen mechanischen Strahlführung an die für den Abtrag erforderliche Leistung anzupassen, ist eine dementsprechend deutliche Herabsetzung der Impulsfrequenz möglich.

In gewissen Grenzen kann auch die Energie pro Impuls eingestellt werden. Leichter einstellbar ist allerdings die Impulsfrequenz, so dass die Energie pro Impuls in der ersten Abtragsphase und in der zweiten Abtragsphase sich nicht allzu stark unterscheiden (höchstens Faktor 3 oder höchstens Faktor 2). Der wesentliche Regelungsparameter zur Einstellung des Energieeintrags pro Fläche ist die Impulsfrequenz. Sie kann so gewählt werden, dass der Energieeintrag pro Fläche auch bei der langsamen mechanischen Führung den für einen ordnungsgemäßen Abtrag notwendigen Wert erhält. Fig. 5 zeigt schematisch einige Überlegungen hierzu:

51a, 51b und 51c symbolisieren nebeneinander liegende Bahnen, die - wie schon weiter oben gesagt - gerade sein könnnen, aber nicht müssen. Kreise 52a, 52b, ... 52y, 52z symbolisieren Auftreffpunkte eines jeweiligen Laserimpulses auf der Werkstückoberfläche. Je nach Laserleistung und Fokussierung kann der Auftreffpunkt einen Durchmesser d von beispielsweise 20 µm haben. Die Einstellung der Vorschubgeschwindigkeit v (entweder optisch über einstellbare Spiegel 25a oder mechanisch über die Stellachsen 22a, 22b der Maschine 20) und der Impulsfrequenz kann so sein, dass sich ein gewünschter Überlapp u1 in Vorschubrichtung ergibt. Gleiche Erwägungen gelten hinsichtlich des Überlapps quer zu den Bahnen, symbolisiert durch die Größe u2 in Fig. 5. Der Überlapp u2 quer zu den einzelnen Bahnen wird durch die räumliche Lage der eingesteuerten Bahnen 51a, 51b bewirkt.

Die Ansteuerung kann so sein, dass die Überlappungen in der ersten Abtragsphase und in der zweiten Abtragsphase in etwa gleich sind (Unterschied kleiner Faktor 2). Obergrenzen des Überlapps u1 bzw. u2 können 40 % oder 30 % oder 20 % des Durchmessers d sein. Untergrenzen können 0 % oder 5 % oder 10 % sein. Der Durchmesser d kann eine Untergrenze von 5 µm oder 10 µm oder 20 µm haben und/oder eine Obergrenze von 200 µm oder 100 µm oder 50 µm.

Bei der mechanischen Strahlführung des Laserstrahls 13 während der zweiten Abtragsphase kann die Impulsfrequenzsteuerung des Laserlichts dazu verwendet werden, dynamische Ungenauigkeiten der mechanischen Strahlführung auszugleichen. Die mechanische Strahlführung benötigt die (positive oder negative) Beschleunigung von Massen, was naturgemäß eine gewisse Zeit dauert. Diese Effekte sind regelmäßig nicht vernachlässigbar, da die involvierten Massen beträchtlich sein können, da ja nicht nur ein womöglich kleines Werkstück oder ein nicht allzu schwerer Laserkopf zu beschleunigen ist, sondern darüber hinaus auch die jeweiligen Halterungen und Aufnahmen. Andererseits sind deren jeweilige dynamische Verhalten bekannt und berechenbar, so dass sie auch ausregelbar sind.

Wenn beispielsweise eine Drehung um eine Achse herum mit einer bestimmten Sollgeschwindigkeit erfolgen soll, wird diese anfänglich unterhalb der Soll-Geschwindigkeit liegen. Es kann dementsprechend auch die Impulsfrequenz niedriger gewählt werden, um den Energieeintrag pro Fläche möglichst konstant bzw. wenig variant zu halten. Allgemein gesprochen kann insoweit die Laserimpulsfrequenz nach Maßgabe der mechanischen Laserstrahlführung erfolgen, insbesondere nach Maßgabe dynamischer Eigenschaften (Masse, Beschleunigung) des mechanischen Systems.

Eine Impulsfrequenzsteuerungseinrichtung kann unmittelbar die Impulsfrequenz der Laserquelle steuern, und/oder kann ein tastbares optisches Gatter aufweisen, mittels dessen einzelne Impulse oder Impulsfolgen dunkelgetastet bzw. ausgeblendet werden können. Letzteres kann insbesondere verwendet werden, wenn die Laserenergie pro Fläche an den langsamen Vorschub bei mechanischer Strahlführung mittels der mechanischen Achsen 22 angepasst werden muss. Es können dann entsprechend der wesentlich langsameren Vorschubgeschwindigkeit des Lasers auf der Werkstückoberfläche z. B. 99% oder 99,2% oder 99,5% aller Impulse dunkelgetastet werden, so dass die Laserenergie gut einstellbar ist.

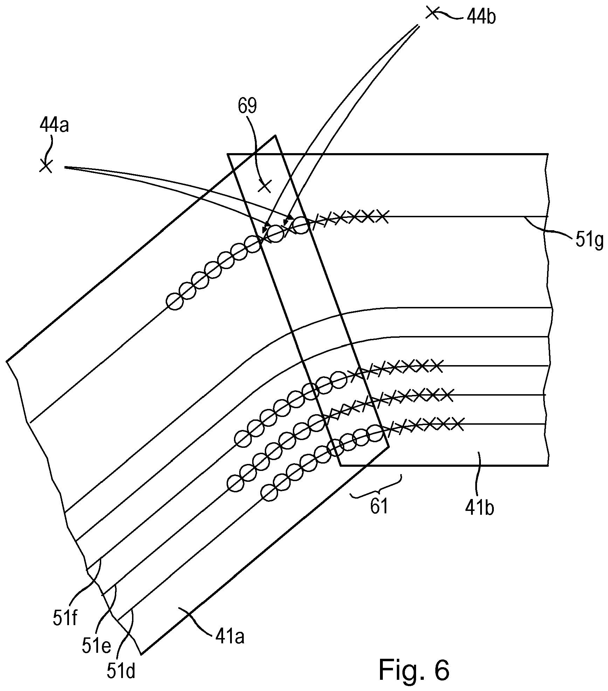

Fig. 6 zeigt eine Ausführungsform, bei der Einzelbereiche überlappend definiert sind. Die Einzelbereiche 41a und 41b überlappen beispielsweise im Bereich 61. Innerhalb des Überlappungsbereichs 61 kann eine einzige Position auf dem Werkstück aus zwei unterschiedlichen Relativpositionen 44a, 44b heraus bearbeitet werden. In Fig. 6 sind Bearbeitungsstellen (Laserimpulsauftreffpunkte) aus der Relativposition 44a heraus mit "o" angedeutet, während Bearbeitungsstellen (Laserimpulsauftreffpunkte) aus der Relativposition 44b heraus mit "x" angedeutet sind. So liegt beispielsweise Position 69 in beiden Einzelbereichen 41a und 41b und kann auf diese Weise wahlweise aus der ersten Relativposition 44a oder der zweiten Relativposition 44b heraus bearbeitet werden. Man kann dies nutzen, um im Überlappungsbereich 61 einen flatternden Übergang zwischen den einzelnen Bereichen in der Weise zu erzeugen, dass der Abtrag längs einzelner Bahnen an unterschiedlichen Stellen in Vorschubrichtung innerhalb eines Einzelbereichs beendet wird, wobei die Bearbeitung dann aus der anderen Relativposition zum anderen Einzelbereich fortgesetzt wird. Auf diese Weise ist es möglich, Stöße, die sich ergeben können, wenn vom einen auf den anderen Einzelbereich übergegangen wird, zu verschmieren und so weniger sichtbar zu machen.

Die Bahnen 51d, 51e und 51f zeigen Ausführungsformen, bei denen der Abtrag längs der jeweiligen Bahnen einmal ganz am Ende des Fensters (von links nach rechts betrachtet) beendet wird (51d), einmal schon deutlich vor dem Ende, aber ganz am Anfang des Überlappungsbereichs 61 (Bahn 51e), und einmal in der Mitte des Überlappungsbereichs (Bahn 51f). Die Bearbeitungsenden aus der einen Relativposition 44a heraus werden bahnweise gespeichert, so dass bei Bearbeitung aus der anderen Relativposition 44b heraus die Bearbeitung Bezug nehmend auf die gespeicherten Daten bahnweise richtig begonnen und fortgesetzt werden kann. Statt der Speicherung konkreter Positionen kann aber auch eine Regel gespeichert sein, nach deren Maßgabe die Bearbeitungsenden aus der einen Relativposition 44a heraus und die Bearbeitungsanfänge aus der anderen Relativposition 44b heraus bestimmt werden.

Es kann sogar so vorgegangen werden, dass innerhalb einer einzelnen Bahn verschränkt in der Weise gearbeitet wird, dass Positionen, die aus den unterschiedlichen Relativpositionen 44a, 44b heraus bearbeitet werden, in Vorschubrichtung verschränkt sind bzw. "über Kreuz" erfolgen, wie dies zu Bahn 51g gezeigt ist. Auch hier werden bahn- und positionsweise die Bearbeitungsstellen aus der einen Relativposition 44a heraus gespeichert, so dass bei Bearbeitung aus der anderen Relativposition 44b heraus die Bearbeitung Bezug nehmend auf die gespeicherten Daten richtig begonnen und fortgesetzt werden kann.

Statt der Speicherung konkreter End- bzw. Bearbeitungspositionen kann aber auch eine Regel gespeichert sein, nach deren Maßgabe die Bearbeitungsenden aus der einen Relativposition 44a heraus und die Bearbeitungsanfänge aus der anderen Relativposition 44b heraus bestimmt werden. Es können auch die Bearbeitungsend- und -anfangsstellen konkret in einem Bearbeitungsprogramm implementiert und als solches gespeichert sein.

Die Abmessung des Bereichs-Überlapps 61 kann bspw. mehr als 2% oder mehr als 5% der Abmessung des Bereichs in Vorschubrichtung betragen und/oder weniger als 20% oder weniger als 10%.

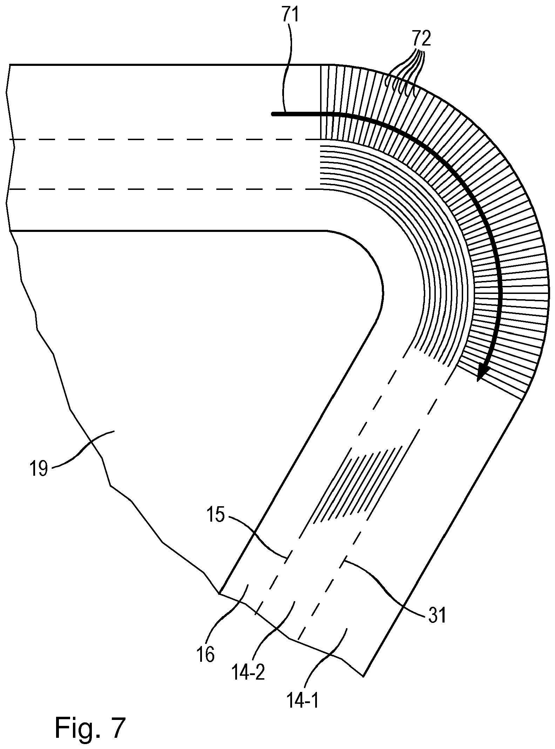

Figur 7 zeigt ein zweiphasiges Abtragsverfahren, bei dem in der ersten Abtragsphase die optische Strahlführung und die mechanische Strahlführung verwendet werden, und bei dem in der zweiten Abtragsphase nur die mechanische Strahlführung verwendet wird.

In der ersten Abtragsphase können optische und mechanische Strahlführung so verwendet werden, dass die eine den Strahl in eine Richtung führt, die die Richtung schneidet, in die die andere den Strahl führt. Beispielsweise kann die mechanische Strahlführung den Strahl parallel (also nicht schneidend) zur endgültigen Oberfläche des Werkstücks führen, während die optische Strahlführung den Strahl in eine (momentane) Richtung führt, die die (momentane) Richtung schneidet, die sich aus der mechanischen Strahlführung ergibt.

Pfeil 71 in Figur 7 symbolisiert eine Führungsbewegung, die durch das Zusammenwirken mehrerer mechanischer Stellachsen hervorgerufen werden kann, während Striche 72 Spuren andeuten, denen folgend ein Laser über die Werkstückoberfläche geführt wird, weil er eine zusammengesetzte Führungsbewegung aus überlagerter mechanischer Strahlführung und optischer Strahlführung erfährt. Weder optische noch mechanische Strahlführung müssen geradlinig sein.

In der Regel wird, wie oben ausgeführt, die Bahngeschwindigkeit des Laserflecks auf der Werkstückoberfläche der optischen Strahlführung deutlich höher als die der mechanischen Strahlführung sein. Die mechanische Strahlführung kann dann einen gedachten Referenzpunkt relativ langsam längs Pfeil 71 führen, während die optische Strahlführung den Laserstrahl relativ hochfrequent hin und her führt. Der Laserstrahl kann sowohl bei der Hin- wie bei der Herbewegung angeschaltet sein, oder er kann bei einer von beiden ("Rücklauf") dunkelgetastet sein oder sehr niederfrequent betrieben werden. Die mechanische Führungsbewegung kann kontinuierlich oder schrittweise sein.

Vorzugsweise laufen die Spuren 72 rechtwinklig auf die Werkstückoberfläche zu. Fig. 7 zeigt aber, dass es im Bereich von Werkstückkanten oder -rundungen (konkav oder konvex) zu Auffächerungen der nach außen gerichteten Spuren (Spuren mit Richtungskomponente in radialer Richtung) kommt. Bei sonst gleichbleibenden Ansteuerbedingungen würde dies die Konsequenz haben, dass sich der Energieeintrag pro Fläche ändert, insbesondere radial außen schwächer als radial innen ist. Die kann kompensiert werden, indem nach außen die Führungsgeschwindigkeit der optischen Strahlführung verringert und/oder die Laserimpulsfrequenz oder Impulsenergie erhöht werden.

Die Auffächerung kann durch geeignete Einstellung der Richtungen der Spuren 72 nach Maßgabe lokaler Konvexitäten oder Konkavitäten eines Werkstücks vermieden bzw. verteilt werden. Beispielsweise können Sie vom Werkstück weg betrachtet zu einem konvexen Bereich hin oder von einem konkaven Bereich weg gegenüber der Richtung lokal senkrecht weg von der Werkstückoberfläche geneigt sein, wobei sich die Neigung abhängig von der Entfernung vom konkave oder konvexen Bereich ändern kann, insbesondere verringern kann, je weiter die Spur vom konkaven oder konvexen Bereich entfernt sind. Wenn es die Werkstückgeometrie erlaubt, können in konkaven oder konvexen Bereich die Spuren 72 auch parallel zueinander geführt sein.

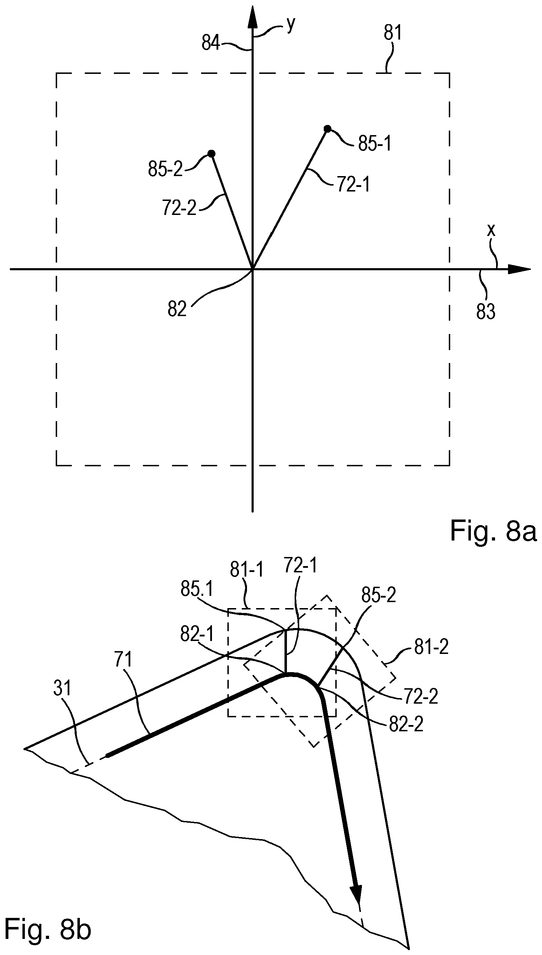

Die Bestimmung der Spuren kann in der Weise geschehen, dass alle Parameter (also Ansteuerung der mechanischen Achsen und Ansteuerung der optischen Komponenten) vorab bestimmt und gespeichert werden. Eine vergleichsweise einfach zu implementierende Alternative hierzu ist in Fig. 8 schematisch gezeigt. Fig. 8a symbolisiert ein Koordinatensystem der optischen Strahlführung ("Scanner"). 81 symbolisiert das abfahrbare Arbeitsfenster (maximale Auslenkungen +/- in x/y-Richtung). 82 symbolisiert einen 0/0-Punkt, der mittig im Arbeitsfenster liegen und als Schnittpunkt einer x-Achse 83 und einer y-Achse 84 definiert sein kann. In diesem Koordinatensystem arbeitet der Scanner (optische Strahlführung - insbes. einstellbare Spiegel 25a und Steuerung).

Gemäß Fig. 8b führen die mechanischen Stellachsen das Arbeitsfenster 81 über eine einzustellende Bewegung gemäß Pfeil 71, die vorab festgelegt und gespeichert wird. Die optisch einzustellenden Spuren 72 werden dagegen in Echtzeit bestimmt. Die mechanisch translatorisch und rotatorisch geführte Bewegung 71 wird als Bewegung eines Referenzpunkts 82 und einer Referenzachse 84 des Scanner-Koordinatensystems angelegt und kann beispielsweise als Referenzpunkt den Scanner-0/0-Punkt 82 (0/0 in x/y-Richtung) und als Referenzachse z. B. die y-Achse 84 so führen, dass der Referenzpunkt längs Pfeil 71 wandert und die Referenzachse jeweils lokal in bestimmter Richtung (z. B. senkrecht) auf der Werkstückoberfläche steht. 81-1 und 81-2 zeigen beispielhaft zwei nacheinander eingenommene momentane Positionen. Die Bewegung 71 des Referenzpunkts 82 kann beispielsweise längs der Grenze 31 erfolgen.

Ausgehend vom jeweils momentanen Referenzpunkt 82-1, 82-2 können im Scannerkoordinatensystem in Echtzeit Richtung und Länge der jeweils momentan zu führenden Spur 72-1, 72-2 oder schlicht ein Endpunkt 85-1, 85-2 der jeweiligen Spur bestimmt werden. Die Scanneransteuerung erfolgt dann dementsprechend. Die Bestimmung kann aus den Gesenkdaten erfolgen.

Die mechanische Strahlführung verwendet eine oder mehrere der translatorischen und/oder rotatorischen Stellachsen 22a, 22b der Maschine gleichzeitig oder nacheinander, um die Relativlage und/oder Relativausrichtung von Werkzeug 13, 25 und Werkstück 10 relativ zueinander einzustellen, zu ändern bzw. zu führen, um so den Laserstrahl 13 über die Werkstückoberfläche zu führen. Die optische Strahlführung verwendet einstellbare optische Elemente 25a im Werkzeug 25, etwa Schwingspiegel, um den Laserstrahl über die Werkstückoberfläche zu führen.

In der Ausführungsform der Figuren 7, 8 kann die zweite Abtragsphase wie vorher beschrieben angelegt sein.

In realer Implementierung können die mechanischen Stellachsen 22 und der optische Scanner 25a separate Steuerungen/Regelungen haben. Zwischen ihnen kann eine geeignete Schnittstelle für Datenaustausch (sowohl von Sensorik weg als auch zu Aktorik hin) vorgesehen sein, etwa auch in Form einer übergeordneten Steuerung.

Es wird darauf verwiesen, dass die in Figur 7 für die erste Abtragsphase gezeigte Spurführung auch in der ersten Abtragsphase der Ausführungsform der Figur 3 möglich ist, nur dass sie dort dann ausschließlich durch die optische Strahlführung eingestellt würde.

In einer weiteren Ausführungsform ist es möglich, die Werkstückbearbeitung noch weiter zu beschleunigen, indem der werkstückferne Bereich des abzutragenden Materials entsprechend der ersten Abtragsphase (14-1 in Fig. 3) nochmals seinerseits in einen werkstückfernen Bereich und einen werkstücknahen Bereich zu unterteilen, wobei der werkstücknahe Bereich mittels optischer Laserstrahlführung bearbeitet wird und der werkstückferne Bereich in anderer Weise, beispielsweise mechanisch, Erosion, oder ähnliches.

In den bisher gezeigten Ausführungsformen liegt die Stapelrichtung der Schichten parallel zu einer Werkstückoberfläche, so dass dementsprechend die Abtragsschichten schneidend zur Werkstückoberfläche liegen (Bahnen 51 und Schichten 17 in Fig. 1a). Mit fortschreitendem Schichtabtrag arbeitet man sich auf diese Weise an der endgültigen Werkstückoberfläche entlang, und die virtuelle Grenze 31 zwischen den Arbeitsbereichen entsprechend den beiden Phasen trennen jede Schicht in zwei Bereiche 14-1, 14-2.

Stattdessen kann aber auch so vorgegangen werden, dass die Stapelrichtung der Schichten senkrecht zur Werkstückoberfläche liegt, so dass dementsprechend die Abtragsschichten parallel zur Werkstückoberfläche liegen bzw. nicht ebenen Werkstückoberflächen folgen. In Fig. 1a würden dann die Linien 51 einzelne Schichten andeuten, während die Linien 17 einzelne Bahnen innerhalb einer Schicht andeuten. Anders als gezeigt würde der Laserstrahl auf die senkrechte Wand 18 auftreffen, nicht auf die Oberfläche 14. Mit fortschreitendem Schichtabtrag arbeitet man sich dann auf die endgültige Werkstückoberfläche zu, und die Grenze 31 zwischen den Arbeitsbereichen entsprechend den beiden Phasen kann zwischen zwei Schichten liegen, so dass jede einzelne Schicht vollständig im einen oder anderen Bereich entsprechend der ersten Abtragsphase oder der zweiten Abtragsphase liegt. Auch Mischformen der beiden Verfahren sind möglich, etwa in einem Werkstückbereich das eine, in einem anderen das andere.

Die eben beschriebene Alternativen können sich aber auch von selbst im Arbeitsfortschritt ergeben, etwa wenn zunächst (am Werkstück "oben") Schichten parallel zur Werkstückoberfläche abgetragen werden, im Verlauf dann aber (an der "Seitenwand") Schichten abgetragen werden, deren Stapelrichtung parallel zur Wand liegt.

Es wird darauf verwiesen, dass sowohl die mechanische wie auch die optische Strahlführung Ansteuerungen im dreidimensionalen Raum vornehmen können. Anders ausgedrückt müssen einzelne Spuren und Schichten nicht in einer geraden Ebene liegen. Der optische Scanner kann durch Steuerung der Fokuslage mittels eines z-Shifters 25b in z-Richtung gesteuert werden. Die mechanische Strahlführung kann mindestens eine entsprechende Achse haben.

Anders als bisher beschrieben kann in der zweiten Abtragsphase der Laserstrahl mittels variabler optischer Einrichtungen (optischer Strahlführung) verlangsamt und schon dadurch genauer gegenüber der ersten Abtragsphase geführt werden. Dies entspricht also einer zweiten Abtragsphase, während derer der Laserstrahl mittels variabler optischer Einrichtungen relativ zum Werkstück über die Werkstückoberfläche geführt wird, wobei aber die Bahnführungsgeschwindigkeit des Laserauftreffpunkts auf dem Werkstück gegenüber derjenigen in der ersten Abtragsphase verringert ist.

Es können dann sonstige Anpassungen, etwa in der Ansteuerung des Lasers, erfolgen, insbesondere um den Leistungs- bzw. Energieeintrag in die Werkstückoberfläche an die reduzierte Bahnführungsgeschwindigkeit anzupassen und um die Genauigkeit der Bahnführung in der zweiten Phase zu erhöhen. Impulsenergie und -frequenz können angepasst (verringert) werden. Es können im elektrischen Kreis veränderliche bzw. schaltbare Filtere vorgesehen sein und damit während der zweiten Abtragsphase Filteranpassungen im Vergleich zur ersten Abtragsphase vorgenommen werden, um nicht mehr benötigte und dann unerwünschte höherfrequente Signalteile herauszufiltern. Es können auch andere (genauere) Element an der elektro-optischen Schnittstelle zur Strahlführung (z. B. einstellbare Spiegel) verwendet werden. Es kann auch eine Kalibrierung zwischen Ansteuersignalen und Laserauftreffpunkten erfolgen.

Die Bahngeschwindigkeit des Laserauftreffpunkts auf der Werkstückoberfläche in der zweiten Abtragsphase kann gegenüber derjenigen in der ersten Abtragsphase mindestens um den Faktor 5 oder 10 oder 20 oder 50 oder 100 verringert sein. Es können die Grenzfrequenz der den elektromechanischen Aktoren zugeführten Signale mindestens um den Faktor 5 oder 10 oder 20 oder 50 oder 100 verringert sein, indem elektrische Filter geeignet verändert, zu- oder abgeschaltet werden. Auch die Impulsfrequenz mindestens um den Faktor 5 oder 10 oder 20 oder 50 oder 100 verringert sein.

Während einer so arbeitenden zweiten Abtragsphase kann der Laserstrahl auch überlagert mittels einer oder mehrerer Stellachsen der Maschine relativ zum Werkstück über die Werkstückoberfläche geführt werden, beispielsweise kontinuierlich oder schrittweise. Die Strahlführung mittels einer oder mehrerer Stellachsen der Maschine relativ zum Werkstück kann gleichzeitig mit oder abwechselnd zu der optischen Laserstrahlführung erfolgen. Es können nur eine oder mehrere rotatorische Stellachsen und/oder eine oder mehrere translatorische Stellachsen oder translatorische und rotatorische Stellachsen verwendet werden.

Die Steuerung kann dazu ausgelegt sein, die oben beschriebenen Merkmale der zweiten Abtragsphase zu implementieren, insbesondere indem die Laserlichtquelle zu verringerter Leistung und/oder Impulsfrequenz und/oder die Strahlführungselemente zu langsamerer Arbeitsweise/Strahlführung veranlasst werden.

Die oben beschriebenen Merkmale der Ausgestaltung der zweiten Abtragsphase mit verlangsamter Verwendung der optischen Strahlführung können statt in der zweiten Abtragsphase auch in einer Abtragsphase zwischen der ersten und der zweiten Abtragsphase, die dann wieder ausschließlich mechanische Stellachsen für die Strahlführung verwendet, verwendet werden.

Das Werkstück kann ein metallisches oder keramisches oder sonstiges Werkstück, ggf. auch aus mehreren der genannten Materialien bestehend, sein oder aufweisen. Das Material kann auch Glas oder Kunststoff sein oder aufweisen. Es kann auch eine (CVD- oder PKD-) Diamantschicht sein . Es kann ein Kompositmaterial sein. Es kann ein zu fertigendes Schneidwerkzeug sein, insbesondere ein Kompositwerkzeug mit einem metallischen Kern und einem zumindest bereichsweise vorhandenen diamantenem Überzug.

Die Abmessungen des durch die Laserauslenkbarkeit definierten Arbeitsfensters der Maschine auf dem Werkstück kann in jeder Dimension kleiner als 30 cm, kleiner als 20 cm, kleiner als 15 cm oder kleiner als 10 cm sein. Es kann in jeder Dimension größer als 2 cm, größer als 5 cm, größer als 10 cm oder größer als 15 cm sein. Ein Werkstück kann größer als ein Arbeitsfenster sein und kann dann mit Arbeitsfensterverschiebung mittels der mechanischen Stellachsen der Maschine abgefahren werden.

Merkmale, die in dieser Beschreibung dargestellt sind, sollen auch dann als miteinander kombinierbar betrachtet werden, wenn dies nicht ausdrücklich gesagt ist, soweit die Kombination sich nicht aus technischen Gründen verbietet. Erläuterungen zu Verfahrensschritten und Verfahrensmerkmalen und Verfahrensoptionen sollen auch als Erläuterungen zu Vorrichtungsteilen oder Vorrichtungsoptionen verstanden werden, die die jeweiligen Verfahrensaspekte implementieren, und umgekehrt.

## Patentansprüche

1. Verfahren zur Bearbeitung eines Werkstücks (10) mit einem Laserstrahl (13) aus einem Laserwerkzeug (25), bei dem zur Werkstückfertigung mit einem Laserstrahl schichtweise Material des Werkstücks nach Maßgabe vorgegebener Definitionen abgetragen wird, indem Werkstück und Laserwerkzeug mit einer oder mehreren Stellachsen (22a, 22b) relativ zueinander positioniert werden und die freiliegende Werkstückoberfläche bahnweise und flächendeckend mit einem Laserstrahl abgefahren wird, um Werkstückmaterial zu verdampfen und/oder zu verbrennen,
**gekennzeichnet durch**
eine ersten Abtragsphase, während derer der Laserstrahl mittels variabler optischer Einrichtungen (25a), insbesondere einstellbare Spiegel innerhalb des Laserwerkzeugs, relativ zum Werkstück über die Werkstückoberfläche geführt wird, mit oder ohne gleichzeitigen Einsatzes mechanischer Stellachsen (22a, 22b) zur Einstellung der Relativlage zwischen Laserwerkzeug und Werkstück, und
eine zweiten Abtragsphase, während derer der Laserstrahl mittels einer oder mehrerer Stellachsen der Maschine relativ zum Werkstück über die Werkstückoberfläche geführt wird, ohne dass der Laserstrahl gleichzeitig mittels variabler optischer Einrichtungen geführt wird, wobei die Brennweite durch eine variable optische Einrichtung (25b) variabel einstellbar sein kann.

2. Verfahren nach Anspruch 1, bei dem der Laserlichtfleck auf der Werkstückoberfläche in der ersten Abtragsphase mit höherer Bahnführungsgeschwindigkeit über die Werkstückoberfläche geführt wird als in der zweiten Abtragsphase, wobei der Unterschied mehr als der Faktor 10 oder mehr als der Faktor 100 sein kann,
und wobei die Bahnführungsgeschwindigkeit in der ersten Abtragsphase über 1 m/s oder über 5 m/s und/oder in der zweiten Abtragsphase unter 0,1 m/s oder unter 0,02 m/s liegen kann.

3. Verfahren nach Anspruch 1 oder 2, **dadurch gekennzeichnet, dass** die erste Abtragsphase beim Abtrag von Bereichen (14-1) verwendet wird, die entfernt von der endgültigen Oberfläche des Werkstücks liegen und dass die zweite Abtragsphase beim Abtrag von Bereichen (14-2) verwendet wird, die an und nahe der endgültigen Oberfläche des Werkstücks liegen.

4. Verfahren nach einem der Ansprüche 1 bis 3, bei dem vor Abtragsbeginn die vom Werkstück abzutragenden Volumina in mehrere aneinander angrenzende Einzelbereiche (41a, 41b, 41c) unterteilt werden und die Einzelbereiche nacheinander abgetragen werden, indem für jeden der Bereiche zunächst mittels mechanischer Stellachsen eine definierte Referenzlage zwischen Werkstück und dem Einzelbereich eingestellt wird und ausgehend von dieser Referenzlage die erste und die zweite Abtragsphase innerhalb des jeweiligen Einzelbereichs durchgeführt wird,
wobei die Referenzlage in der Weise eingestellt werden kann, dass jedem Einzelbereich ein Referenzpunkt (42a, 42b, 42c) zugeordnet wird und die Referenzlage durch Einstellen einer bestimmten Relativlage zwischen Referenzpunkt und Laserwerkzeug eingestellt wird, wobei der Referenzpunkt eine translatorisch definierte Referenzposition (x0i, y0i, z0i) und eine rotatorisch definierte Referenzausrichtung aufweisen kann (phi0i, psi0i), und wobei die Referenzlage eine translatorisch und rotatorisch definierte Relativlage nach Maßgabe des Referenzpunkts sein kann,
wobei die Einzelbereiche nach Maßgabe eines oder mehrerer der folgenden Kriterien festgelegt werden können:
- Anpassung der Bearbeitungsgrenzen während einer Referenzlage an das Arbeitsfeld des Abtragslasers,
- Vermeidung von Abschattungen des Lasers durch Werkstückteile oder Materialresiduen,
- Vermeidung von Bereichsgrenzen an bestimmten Oberflächenbereichen des Werkstücks.
- Vermeidung großer Abstandsunterschiede zwischen Laser und Werkstückoberfläche und/oder Ausrichtungsunterschiede von Werkstückoberflächenteilen innerhalb einer Referenzlage.

5. Verfahren nach einem der vorherigen Ansprüche, **dadurch gekennzeichnet, dass** mehrere oder alle Abtragsschichten (17) schneidend zur endgültigen Werkstückoberfläche liegen, und
innerhalb einer Abtragsschicht die erste und die zweite Abtragsphase durchgeführt werden, bevor die folgende Schicht abgetragen wird, oder dass die erste oder die zweite Abtragsphase nacheinander in mehreren Schichten durchgeführt wird, bevor die jeweils andere Phase in einer oder mehreren Schichten durchgeführt wird.

6. Verfahren nach einem der vorherigen Ansprüche, **dadurch gekennzeichnet, dass** die Bahnen (51), längs derer der Laser während des Materialabtrags geführt wird, nicht geradlinig sein und insbesondere an eine Kontur des endgültigen Werkstücks angepasst sein können.

7. Verfahren nach einem der vorherigen Ansprüche, **dadurch gekennzeichnet, dass** die Stapelrichtung der Schichten parallel zu einer Werkstückoberfläche liegt bzw. dass die Abtragsschichten schneidend zur Werkstückoberfläche liegen.

8. Verfahren nach einem oder mehreren der vorherigen Ansprüche, **dadurch gekennzeichnet, dass** in der zweiten Abtragsphase mehrere der variablen optischen Einrichtungen konstant gehalten werden oder dass in der zweiten Abtragsphase das Laserlicht um mehrere der variablen optischen Einrichtungen herumgeführt wird.

9. Verfahren nach einem der vorherigen Ansprüche, **dadurch gekennzeichnet, dass** in der zweiten Abtragsphase die Impulsfrequenz des Laserlichts nach Maßgabe dynamischer Eigenschaften der während der zweiten Abtragsphase betätigten mechanischen Stellachsen der Maschine gesteuert oder geregelt wird.

10. Verfahren nach einem der vorherigen Ansprüche, **dadurch gekennzeichnet, dass** die Stapelrichtung mehrerer oder aller Schichten senkrecht zu einer Werkstückoberfläche liegt bzw. dass die Abtragsschichten parallel zur endgültigen Werkstückoberfläche bzw. dieser mit Abstand folgend liegen.

11. Verfahren nach einem der vorherigen Ansprüche, **dadurch gekennzeichnet, dass**
in der ersten Abtragsphase nur die optische Strahlführung verwendet wird.

12. Verfahren nach einem der Ansprüche 1 bis 10, **dadurch gekennzeichnet, dass**
in der ersten Abtragsphase die optische Strahlführung und die mechanische Strahlführung verwendet werden, vorzugsweise so, dass die eine den Strahl in eine Richtung führt, die die Richtung schneidet, in die die andere den Strahl führt, und vorzugsweise so, dass die mechanische Strahlführung den Strahl parallel zur endgültigen Oberfläche des Werkstücks führt.

13. Verfahren nach einem der vorherigen Ansprüche, **gekennzeichnet durch** eines oder mehrere der folgenden Merkmale:
- während beider Abtragsphasen wird der Laser längs nebeneinander liegender Spuren geführt, die auch überlappen können,
- das Laserlicht ist gepulstes Laserlicht, dessen Impulsfrequenz nach Maßgabe der Bahngeschwindigkeit des Lasers auf dem Werkstück so eingestellt wird, dass sich ein gewünschter Überlapp von oder ein gewünschter Abstand zwischen Auftreffflecken des Laserlichts auf der Werkstückoberfläche ergeben,
- das Werkstück ist ein Schneidwerkzeug, dessen Oberfläche mit einem CVD- oder einem PKD-Diamantüberzug versehen ist.

14. Laserbearbeitungsmaschine (20) zur Bearbeitung eines Werkstücks (10), insbesondere zur Durchführung des Verfahrens nach einem der vorherigen Ansprüche, mit
einem Laserwerkzeug (25) zur Führung eines Laserstrahl, der dazu ausgelegt ist, zur Werkstückfertigung schichtweise Material des Werkstücks nach Maßgabe vorgegebener Definitionen abzutragen, indem die freiliegende Werkstückoberfläche bahnweise und flächendeckend mit einem Laserstrahl abgefahren wird, um Werkstückmaterial zu verdampfen und/oder zu verbrennen,
einem Werkstücktisch (24) zum Halten eines Werkstücks (10),
mehreren Stellachsen (22a, 22b) zur translatorischen und rotatorischen Einstellung der relativen Lage und Haltung von Werkstück (10) und Laserwerkzeug (25) relativ zueinander, und
einer Steuerung (27) zur Steuerung der Laserstrahlführung im Laserwerkzeug (25) und der Stellachsen (22a, 22b),
**dadurch gekennzeichnet, dass**
die Steuerung dazu ausgelegt ist,
in einer ersten Abtragsphase den Laserstrahl mittels variabler optischer Einrichtungen (25a), insbesondere einstellbare Spiegel innerhalb des Laserwerkzeugs, mit oder ohne gleichzeitigen Einsatzes mechanischer Stellachsen (22) zur Einstellung der Relativlage zwischen Laserwerkzeug und Werkstück relativ zum Werkstück (10) über die Werkstückoberfläche (14) zu führen, und
in einer zweiten Abtragsphase den Laserstrahl mittels einer oder mehrerer mechanischer Stellachsen (22a, 22b) der Maschine relativ zum Werkstück über die Werkstückoberfläche zu führen, ohne dass der Laserstrahl gleichzeitig mittels variabler optischer Einrichtungen geführt wird, wobei die Brennweite durch eine variable optische Einrichtung (25b) variabel einstellbar sein kann.

15. Maschine nach Anspruch 14, **gekennzeichnet durch** eine Laserquelle, die ein gepulstes Laserlicht aussendet, und eine Impulsfrequenzsteuerung, die die Impulsfrequenz des Laserlichts nach Maßgabe dynamischer Eigenschaften während der Laserbearbeitung steuert, wobei die Impulsfrequenzsteuerung zur Steuerung der Impulsfrequenz der Laserquelle ausgelegt sein kann und/oder ein tastbares optisches Gatter aufweist.

## Claims

1. Method for machining a work piece (10) by means of a laser beam (13) from a laser tool (25), wherein for work piece production, material of the work piece is removed with a laser beam in layers in accordance with predetermined definitions by positioning the work piece and the laser tool relative to each other with one or more adjusting axes (22a, 22b) and scanning the exposed surface of the work piece in path lines and across the whole area with a laser beam in order to vaporize and/or burn work piece material,
**characterized by**
a first removal phase during which the laser beam is guided relative to the work piece over the work piece surface by means of variable optical means (25a), particularly adjustable mirrors within the laser tool, with or without simultaneous use of mechanical adjusting axes (22a, 22b) for adjusting the relative position between laser tool and work piece, and
a second removal phase during which the laser beam is guided relative to the work piece over the work piece surface by means of one or more adjusting axes of the apparatus without guiding the laser beam simultaneously by means of variable optical means, wherein the focal length can be adjustable by variable optical means (25).

2. Method according to claim 1, wherein the laser beam spot on the work piece surface is guided in the first removal phase with a higher path guiding speed over the work piece surface than in the second removal phase, wherein the difference may be more than a factor of 10 or more than a factor of 100, and wherein the path guiding speed may be more than 1 m/s or more than 5 m/s in the first removal phase and/or below 0.1 m/s or below 0.02 m/s in the second removal phase.

3. Method according to claim 1 or 2, **characterized in that** the first removal phase is applied in the removal of areas (14-1) located remote from the final surface of the work piece, and that the second removal phase is applied in the removal of areas (14-2) located at and close to the final surface of the work piece.

4. Method according to any of claims 1 to 3, wherein, prior to starting the removal, the volumes to be removed from the work piece are subdivided into several individual areas (41a, 41b, 41c) adjoining each other, and the individual areas are removed successively by first adjusting a defined reference position between the work piece and the individual area for each of the areas by means of mechanical adjusting axes, and, starting from that reference position, performing the first and the second removal phase within the respective individual area,
wherein the reference position can be adjusted in such a manner that a reference point (42a, 42b, 42c) is allocated to each of the individual areas, and the reference position is adjusted by adjustment of a definite relative position between the reference point and the laser tool, wherein the reference point may have a translationally defined reference position (x0i, y0i, z0i) and a rotationally defined reference orientation (phi0i, psi0i), and wherein the reference position may be a translationally and rotationally defined reference position in accordance with the reference point,
wherein the individual areas can be determined in accordance with one or more of the following criteria:
- adaptation of the machining boundaries to the working field of the removing laser during a reference position,
- avoidance of shadowing the laser by parts of the work piece or material leftovers,
- avoidance of area boundaries at certain surface areas of the work piece,
- avoidance of large distance differences between laser and work piece surface and/or orientation differences of parts of the work piece surface within a reference position.

5. Method according to any of the preceding claims, **characterized in that** several or all of the layers (17) to be removed are oriented to cross the final work piece surface, and
the first and the second removal phase are performed within one layer to be removed before removing the subsequent layer, or that the first or the second removal phase is performed successively in a number of layers prior to performing the respective other removal phase in one or a number of layers.

6. Method according to any of the preceding claims, **characterized in that** the paths (51) along which the laser is guided during the removal of material, may not be straight-lined and be particularly adapted to a contour of the final work piece.

7. Method according to any of the preceding claims, **characterized in that** the stacking direction of the layers is parallel to a work piece surface, or the layers to be removed are oriented to cross the work piece surface, respectively.

8. Method according to one or more of the preceding claims, **characterized in that** in the second removal phase several of the variable optical means are kept constant or that in the second removal phase the laser light is guided detouring several of the variable optical means.

9. Method according to any of the preceding claims, **characterized in that** in the second removal phase the pulse frequency of the laser light is open-loop or closed-loop controlled in accordance with dynamic properties of the mechanical adjusting axes of the apparatus operated during the second removal phase.

10. Method according to any of the preceding claims, **characterized in that** the stacking direction of several or all of the layers is perpendicular to a work piece surface, or that the layers to be removed are parallel to the final surface of the work piece or follow the work piece surface at a distance, respectively.

11. Method according to any of the preceding claims, **characterized in that** in the first removal phase only the optical beam guidance is applied.

12. Method according to any of claims 1 to 10, **characterized in that**
in the first removal phase, the optical beam guidance and the mechanical beam guidance are applied, preferably in such a manner that one of them is guiding the beam in a direction which intersects the direction in which the other is guiding the beam, and preferably in such a way that the mechanical beam guidance guides the beam parallel to the surface of the final work piece.

13. Method according to any of the preceding claims, **characterized by** one or more of the following features:
- during both of the removal phases the laser is guided along paths lying side by side which may also overlap,
- the laser light is pulsed laser light, the pulse frequency thereof being adjusted in accordance with the track speed of the laser on the work piece such that there results a desirable overlap of impinging light spots or a desirable distance between impinging light spots of the laser light on the surface of the work piece,
- the work piece is a cutting tool the surface thereof being provided with a CVD or PKD diamond coating.

14. Laser machining apparatus (20) for machining a work piece (10), particularly for carrying out the method of any of the preceding claims, comprising:
a laser tool (25) for guiding a laser beam designed for work piece production to remove material of the work piece in layers in accordance with predetermined definitions by scanning the exposed surface of the work piece in path lines and across the whole area with a laser beam in order to vaporize and/or burn work piece material,
a work piece table (24) for holding a work piece (10),
a number of adjusting axes (22a, 22b) for translational and rotational adjustment of the relative position and holding the work piece (109 and the laser tool (25) relative to each other, and
a controller (27) for controlling the laser guidance in the laser tool (25) and the adjusting axes (22a, 22b),
**characterized in that**
the controller is adapted
to guide the laser beam in a first removal phase over the work piece surface (14) by means of variable optical means (25a), particularly adjustable mirrors within the laser tool, with or without simultaneous use of mechanical adjusting axes (22) for adjusting the relative position between laser tool and work piece relative to the work piece (10), and
to guide the laser beam in a second removal phase over the work piece surface by means of one or more mechanical adjusting axes (22a, 22b) of the apparatus relative to the work piece without guiding the laser beam simultaneously by means of variable optical means, wherein the focal length can be variably adjustable by variable optical means (25b).

15. Apparatus according to claim 14, **characterized by** a laser source emitting a pulsed laser light and a pulse frequency controller controlling the pulse frequency of the laser light in accordance with dynamic properties during the laser machining, wherein the pulse frequency controller can be adapted for controlling the pulse frequency of the laser source and/or a blankable optical shutter or chopper is comprised.

## Revendications

1. Procédé d'usinage d'une pièce (10) avec un faisceau laser (13) provenant d'un outil laser (25), dans lequel, pour réaliser la pièce, on enlève couche après couche du matériau de la pièce avec un faisceau laser conformément aux définitions données, en positionnant la pièce et l'outil laser l'un par rapport à l'autre avec un ou plusieurs axes de positionnement (22a, 22b) et en enlevant la surface exposée de la pièce avec un faisceau laser bande après bande et sur toute la surface pour évaporer et/ou brûler le matériau de la pièce,
caractérisé en
une première phase d'enlèvement au cours de laquelle le faisceau laser, au moyen de dispositifs optiques variables (25a), en particulier des miroirs réglables à l'intérieur de l'outil laser, est guidé relativement par rapport à la pièce sur la surface de la pièce, avec ou sans utilisation simultanée d'axes de positionnement (22a, 22b) pour régler la position relative entre l'outil laser et la pièce, et
une deuxième phase d'enlèvement au cours de laquelle le faisceau laser est guidé relativement par rapport à la pièce sur la surface de la pièce au moyen d'un ou de plusieurs axes de positionnement de la machine, sans que le faisceau laser soit guidé simultanément au moyen de dispositifs optiques variables, la distance focale pouvant être réglée de manière variable par l'intermédiaire d'un dispositif optique variable (25b).

2. Procédé selon la revendication 1, dans lequel le spot laser est guidé sur la surface de la pièce, dans la première phase d'enlèvement, avec une vitesse de guidage de bande plus élevée que dans la deuxième phase d'enlèvement, la différence pouvant être supérieur au facteur 10 ou supérieur au facteur 100,
et dans lequel la vitesse de guidage de bande, dans la première phase d'enlèvement, peut être supérieure à 1 m/s ou supérieure à 5 m/s, et/ou, dans la deuxième phase d'enlèvement, inférieure à 0,1 m/s ou inférieure à 0,02 m/s.

3. Procédé selon la revendication 1 ou 2, **caractérisé en ce que** la première phase d'enlèvement est utilisée pour l'enlèvement des zones (14-1) qui sont éloignées de la surface définitive de la pièce, et **en ce que** la deuxième phase d'enlèvement est utilisée pour l'enlèvement des zones (14-2) qui sont en contact avec et proches de la surface définitive de la pièce.

4. Procédé selon l'une quelconque des revendications 1 à 3, dans lequel, avant de commencer l'enlèvement, les volumes devant être enlevés de la pièce sont divisés en plusieurs zones individuelles adjacentes (41a, 41b, 41c) et les zones individuelles sont enlevées les unes après les autres en réglant pour chacune des zones, tout d'abord au moyen d'axes de positionnement mécaniques, une position de référence définie entre la pièce et la zone individuelle et, à partir de cette position de référence, la première et la deuxième phase d'enlèvement sont exécutées à l'intérieur de la zone individuelle correspondante,
dans lequel la position de référence peut être réglée de manière à attribuer un point de référence (42a, 42b, 42c) à chaque zone individuelle, et de manière à régler la position de référence en réglant une position relative définie entre le point de référence et l'outil laser, le point de référence pouvant présenter une position de référence définie par translation (x0i, y0i, z0i) et une orientation de référence définie par rotation (phi0i, psi0i), et la position de référence pouvant être une position relative définit par translation et par rotation conformément au point de référence,
dans lequel les zones individuelles peuvent être déterminées conformément à un à plusieurs des critères suivants :
- adapter les limites d'usinage, pendant une position de référence, à la zone de travail du laser d'enlèvement,
- éviter les projections d'ombre sur le laser dues à la pièce où aux résidus de matériau,
- éviter les limites des zones au niveau de certaines zones de surface définie de la pièce,
- éviter les grandes différences de distance entre le laser et la surface de la pièce et/ou les différences d'orientation de parties de la surface de la pièce à l'intérieur d'une position de référence.

5. Procédé selon l'une des revendications précédentes, **caractérisé en ce que** plusieurs ou toutes les couches d'enlèvement (17) sont transversales par rapport à la surface définitive de la pièce, et
à l'intérieur d'une couche d'enlèvement, la première et la deuxième phase d'enlèvement sont exécutées avant d'enlever la couche suivante, ou **en ce que** la première ou la deuxième phase d'enlèvement sont exécutées l'une après l'autre en plusieurs couches avant que l'autre phase respective soit exécutée en une ou en plusieurs couches.

6. Procédé selon l'une des revendications précédentes, **caractérisé en ce que** les bandes (51) le long desquelles le laser est guidé pendant l'enlèvement du matériau ne sont pas rectilignes et peuvent en particulier être adaptées à un contour de la pièce définitive.

7. Procédé selon l'une des revendications précédentes, **caractérisé en ce que** la direction d'empilement des couches est parallèle à une surface de la pièce ou **en ce que** les couches d'enlèvement sont transversales par rapport à la surface de la pièce.

8. Procédé selon l'une ou plusieurs des revendications précédentes, **caractérisé en ce que**, dans la deuxième phase d'enlèvement, plusieurs des dispositifs optiques variables sont maintenus constants ou **en ce que**, dans la deuxième phase d'enlèvement, la lumière laser est guidée autour de plusieurs des dispositifs optiques variables.

9. Procédé selon l'une des revendications précédentes, **caractérisé en ce que** , dans la deuxième phase d'enlèvement, la fréquence d'impulsion de la lumière laser est commandée ou réglée conformément aux propriétés dynamiques des axes de positionnement mécaniques de la machine activés pendant la deuxième phase d'enlèvement.

10. Procédé selon l'une des revendications précédentes, **caractérisé en ce que** la direction d'empilement de plusieurs ou de toutes les couches est verticale par rapport à une surface de la pièce, ou **en ce que** les couches d'enlèvement sont parallèles à la surface définitive de la pièce ou sont situées à la suite à distance de celle-ci.

11. Procédé selon l'une des revendications précédentes, **caractérisé en ce que**
dans la première phase d'enlèvement, on utilise uniquement le guidage laser optique.

12. Procédé selon l'une des revendications 1 à 10, **caractérisé en ce que**
dans la première phase enlèvement, on utilise le guidage laser optique et le guidage laser mécanique, de préférence de manière à ce que l'un des guidages guide le faisceau dans une direction qui coupe la direction dans laquelle l'autre guidage guide le faisceau, et de préférence de manière à ce que le guidage de faisceau mécanique guide le faisceau parallèlement à la surface définitive de la pièce.

13. Procédé selon l'une des revendications précédentes, **caractérisé par** l'une ou plusieurs des caractéristiques suivantes :
- pendant les deux phases d'enlèvement, le laser est guidé le long de tracés juxtaposés qui peuvent également se chevaucher,
- la lumière laser est une lumière laser puisée dont la fréquence d'impulsion est réglée conformément à la vitesse de bande du laser sur la pièce de manière à obtenir un chevauchement voulu ou une distance voulue entre les spots de la lumière laser tombant sut la surface de la pièce,
- la pièce est un outil de coupe dont la surface est munie d'un revêtement diamant CVD ou PCD.

14. Machine d'usinage laser (20) destinée à usiner une pièce (10), en particulier pour exécuter le procédé selon l'une des revendications précédentes, comprenant
un outil laser (25) pour guider un faisceau laser configuré pour réaliser une pièce par enlèvement couche après couche du matériau de la pièce conformément aux définitions données, le faisceau laser étant guidé sur toute la surface de la pièce exposée, bande après bande, pour évaporer et/ou brûler le matériau de la pièce,
une table porte-pièce (24) pour maintenir une pièce (10), plusieurs axes de positionnement (22a, 22b) pour régler la position relative par translation et par rotation, et maintenir la pièce (10) et l'outil laser (25) relativement l'un par rapport à l'autre, et
une commande (27) pour commander le guidage du faisceau laser dans l'outil laser (25) ainsi que les axes de positionnement (22a, 22b),
**caractérisé en ce que**
la commande est conçue pour
dans une première phase d'enlèvement, guider le faisceau laser relativement par rapport à la pièce (10) sur la surface de la pièce (14), au moyen de dispositifs optiques variables (25a), en particulier des miroirs réglables à l'intérieur de l'outil laser, avec ou sans utilisation simultanée d'axes de positionnement mécaniques (22) pour régler la position relative entre l'outil laser et la pièce, et
dans une deuxième phase d'enlèvement, guider le faisceau laser relativement par rapport à la pièce sur la surface de la pièce, au moyen d'un ou de plusieurs axes de positionnement mécaniques (22a, 22b) de la machine, sans que le faisceau laser soit guidé simultanément au moyen de dispositifs optiques variables, la distance focale pouvant être réglée de manière variable par l'intermédiaire d'un dispositif optique variable (25b).

15. Machine selon la revendication 14, **caractérisée par** une source laser qui envoie une lumière laser pulsée, et une commande de fréquence d'impulsion qui commande la fréquence d'impulsion de la lumière laser conformément aux propriétés dynamiques pendant l'usinage laser, dans laquelle la commande de fréquence d'impulsion est configurée pour commander la fréquence d'impulsion de la source laser et/ou présente une porte optique tangible.
